(19) Europäisches Patentamt
European Patent Office
Office européen des brevets

(11) **EP 0 803 989 B1**

(12) **EUROPEAN PATENT SPECIFICATION**

(45) Date of publication and mention
of the grant of the patent:
**16.06.1999 Bulletin 1999/24**

(51) Int Cl.6: **H04B 1/66**

(21) Application number: **97106313.6**

(22) Date of filing: **17.04.1997**

(54) **Method and apparatus for encoding of a digitalized audio signal**

Verfahren und Apparat zur Kodierung eines digitalen Audiosignals

Procédé et appareil pour le codage d'un signal audio-nimérique

(84) Designated Contracting States:
**DE FR GB IT**

(30) Priority: **26.04.1996 EP 96106678**

(43) Date of publication of application:
**29.10.1997 Bulletin 1997/44**

(73) Proprietor: **DEUTSCHE THOMSON-BRANDT
GMBH
78048 Villingen-Schwenningen (DE)**

(72) Inventor: **Spille, Jens
30966 Hemmingen (DE)**

(74) Representative: **Hartnack, Wolfgang, Dipl.-Ing.
Deutsche Thomson-Brandt GmbH
Licensing & Intellectual Property,
Karl-Wiechert-Alee 74
30625 Hannover (DE)**

(56) References cited:
EP-A- 0 655 876          WO-A-94/07313
DE-A- 4 345 171

## Description

The present invention relates to a method and an apparatus for encoding of a digitalized audio signal.

### Background

The psycho acoustic model in an audio encoder, e.g. in a MPEG 1 or MPEG 2 audio system, calculates a masking threshold for data reduction purposes. The masking threshold may vary for each subband of the audio signal. The so called bit allocation process defines for each subband due to the determined masking threshold, with which resolution the subband samples should be quantized. This will vary in time with each block of audio signal samples. Therefore the necessary bitrate for an optimal sound quality should also vary for the different blocks. In practice in an MPEG1 audio system, the available desired bitrate is normally fixed for each audio channel. Because, with respect to the desired bitrate, the exact number of bits for the various parameters and data required for transmission cannot be estimated exactly in advance some bits are left over or some bits are missing. Usually a simple allocation strategy is used to overcome this problem, e.g. by assigning a nearly equal number of such bits for each subband.

The present allocation strategies mentioned above do not take into account the psycho acoustic model used in the encoder. Nowadays, encoders are optimised for a small range of bitrates. In spite of this fact such audio coders are used also for operation in a larger range of bit rates, but they are not optimised for doing so. The different bitrates may occur between the left and right channel and/or additional channels (left surround, right surround, center) and/or in MPEG LayerIII where the desired bit rate can vary from frame to frame.

WO-A-9407313 discloses a prior art speech encoder having two different modes for encoding speech signals with different bit rates.

### Summary of the Invention

It is an object of the invention to disclose a method of achieving a better audio coding quality with respect to such allocation strategies. This object is achieved by the method disclosed in claim 1.

It is a further object of the invention to disclose an apparatus which utilises the inventive method. This object is achieved by the apparatus disclosed in claim 6.

In a first embodiment of the invention at least three psycho acoustic models are used instead of one, each of which is optimised for a certain bitrate or range of bitrates. Depending on the desired channel or frame bitrate the encoder selects the appropriate one of the psycho acoustic models. The output of one of the psycho acoustic models can be regarded as a standard masking threshold for a certain desired bitrate.

When the present number of bits is to high, the second psycho acoustic model is used which has in general a higher masking threshold. This higher threshold is not the standard threshold being lifted equally over the spectrum like in the prior art, but lifted in relation to a psycho acoustic model which is still adapted to the present input spectrum.

When the present number of bits is to low, the third psycho acoustic model is used which has in general a lower masking threshold. Again, this lower threshold is not the standard threshold being decreased equally over the spectrum like in the prior art, but decreased in relation to a psycho acoustic model which is still adapted to the present input spectrum.

A second embodiment of the invention solves the problems of the hard switching between the different psycho acoustic models, e.g. between the left and right channel and/or in MPEG LayerI to LayerIII where the desired data rate may vary from frame to frame. Instead of using binary logic for switching a fuzzy logic is performed.

In principle, the inventive method is suited for audio coding in MPEG2 LayerI to LayerIII and/or MPEG 2 NBC systems.

Advantageous additional embodiments of the inventive method are resulting from the respective dependent claims.

Advantageous additional embodiments of the inventive apparatus are resulting from the respective dependent claims.

### Drawings

Preferred embodiments of the invention are described with reference to the accompanying drawings, which show in:

Fig. 1    a diagram showing a 'Hard Switching' method between three masking thresholds;

Fig. 2    a program structure for an audio encoding apparatus which uses the 'Hard Switching' method;

Fig. 3    a diagram showing the 'Soft Switching' method between three masking thresholds;

Fig. 4    a program structure for an audio encoding apparatus which uses the 'Hard Switching' method;

Fig. 5    a block diagram showing the principle constitution of an audio encoding apparatus;

### Preferred embodiments

Valuable information about audio encoding technique is included in the International Standard ISO/IEC 11172-3, First Edition 1993-08-01, 'Information technology- Coding of moving pictures and associated audio for digital storage media at up to about 1,5 MBit/s', Part 3 Audio.

The inventive method uses more than one psycho acoustic model. As an example three different psycho acoustic models are used. Each one of the psycho acoustic models is adapted to a specific predefined data rate of the audio bit stream. As an example there are the three different data rates 32 kBit/s, 56 kBit/s and 80 kBit/s. The different psycho acoustic models are abbreviated PSM_Low, PAM_Mid, PAM_High. PAM_Low is adapted to the low data rate of 32 kBit/s, PAM_Mid is adapted to the mid data rate of 56 kBit/s and PAM_High to the high data rate of 80 kBit/s.

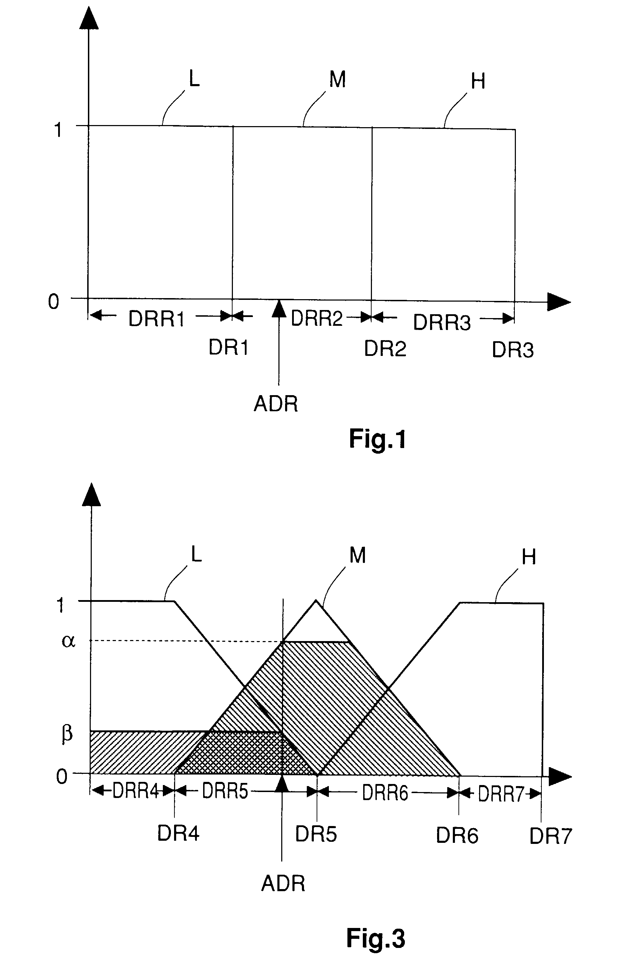

Referring now to Fig. 1, it shows, in which areas which psycho acoustic model is used. On the X-axis in Fig. 1 the range of possible data rates which can be used by the audio encoder is stipulated. On the Y-axis the share of each psycho acoustic model is given for each possible data rate. When the available data rate is within range DRR1, the psycho acoustic model PAM_Low is used for the calculation of the masking threshold. So the sharing factor is 1, i.e. 100% for PAM_Low and 0% for PAM_Mid and PAM_High. When the available data rate is within range DRR2, the psycho acoustic model PAM_MID is used for the calculation of the masking threshold. So, here the sharing factor is 1, i.e. 100% for PAM_Mid and 0% for PAM_Low and PAM_High. When the available data rate is within range DRR3, the psycho acoustic model PAM_High is used for the calculation of the masking threshold. So, here the sharing factor is again 1, i.e. 100% for PAM_High and 0% for PAM_Low and PAM_Mid. This kind of switching between the different psycho acoustic models will be referred to as 'Hard Switching' from now on.

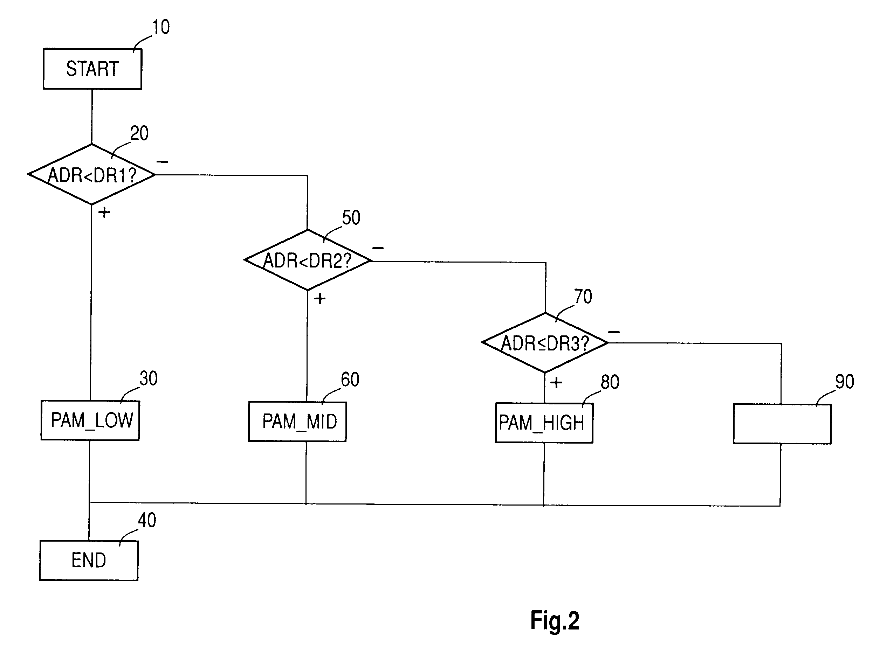

An appropriate simple computer program, which works according to this method is shown in Fig. 2 and will be described now.

Reference numeral 10 denotes the starting point of the program. Reference numeral 20 denotes a decision step, where it is determined, if the available data rate ADR is less than the data rate value DR1 shown in Fig. 1. If this is the case, the program proceeds with step 30. Therein the masking threshold is determined by usage of the psycho acoustic model PAM_Low. After this step the program will end in step 40. If in decision step 20 it is decided that the available data rate ADR is greater than data rate value DR1, it is analysed in decision step 50, whether the available data rate ADR is less than data rate value DR2 or not. In case of a positive decision the program proceeds with step 60 and the psycho acoustic model PAM_Mid is used for the calculation of the masking threshold. In case of a negative decision in step 50, the program proceeds to decision step 70. There it is analysed, whether the available data rate is less than or equal to the data rate value DR3. If this is the case, the program proceeds to step 80 where the psycho acoustic model PAM_High is used for the calculation of the masking threshold. In case of a negative answer in decision step 70, the program proceeds with step 90, which includes an appropriate error detection algorithm. After program steps 60, 80, 90 the program will be finished in step 40.

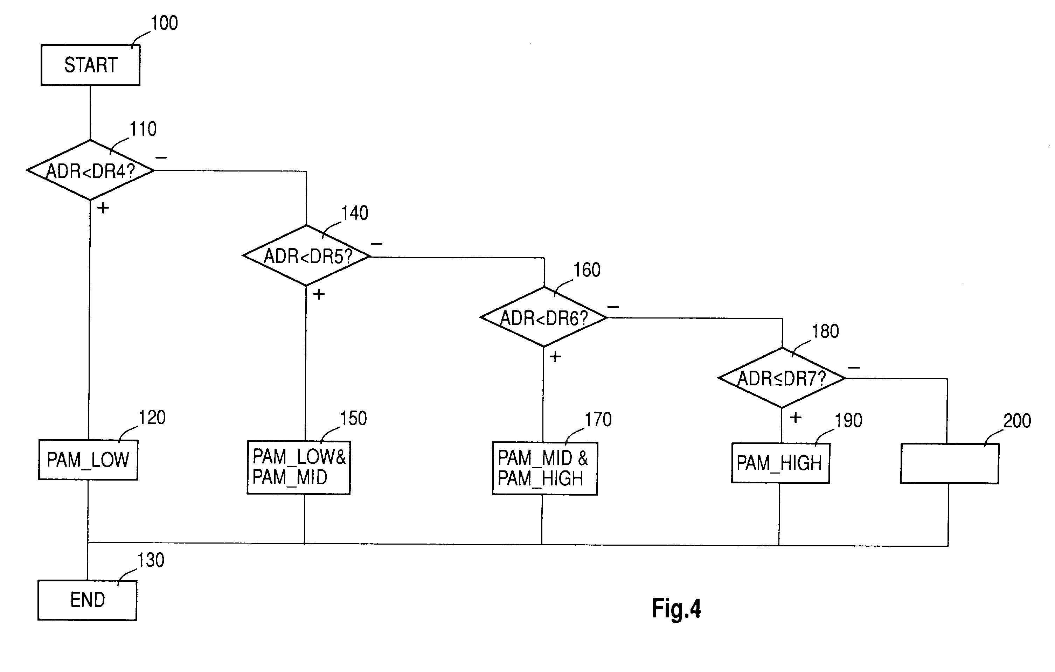

A refined method of switching between different psycho acoustic models called 'Soft Switching' will be explained hereinafter. In Fig. 3 there are three different ranges for the available data rate shown, named DRR4, DRR5 and DRR6. If the available data rate is within range DRR4, then the psycho acoustic model PAM_Low will be used only, i.e. with 100% share for the calculation of the masking threshold. If the available data rate is within range DRR7, then the psycho acoustic model PAM_High is used only. If the available data rate is within range DRR5, then both psycho acoustic models PAM_Low and PAM_Mid are used for the calculation of the corresponding masking threshold. In case the available data rate is within the range DRR6, the two psycho acoustic models PAM_Mid and PAM_High are used for the calculation of the masking threshold. As an example in Fig. 3 it is shown, that the available data rate ADR is within range DRR5. This means that two masking thresholds are calculated, namely a first one called *Mask_Low* corresponding to the PAM_Low model and a second one called *Mask_Mid* corresponding to the PAM_Mid model. Both masking thresholds are combined to a resulting masking threshold *Mask*. The new masking threshold is calculated with an average calculation according to the following formula:

$$Mask = \alpha * Mask\_Mid + \beta * Mask\_Low$$

Formula 1: Example for average calculation.

Therein $\alpha$ is the sharing factor for the psycho acoustic model PAM_Mid and $\beta$ the sharing factor for the psycho acoustic model PAM_Low. Both sharing factors are shown in Fig. 3. They are determined by looking up in tables which contain the values for representing the respective Curves L and M at the point of the available data rate ADR. With these technique it is possible to design an audio encoder which is capable of generating bit streams with a wide range of data rates.

An appropriate computer program which carries out the described method of soft switching will now be explained with respect to Fig. 4. Reference numeral 100 denotes the Start step of the computer program. In the next step 110 it is analysed whether the available data rate ADR is less than the data rate DR4 or not. A positive result leads to step 120 as the next program step. There, the masking threshold will be calculated only on the basis of the psycho acoustic model PAM_Low. After this step the program will be finished in step 130. In case of a negative result in step 110, the program proceeds with step 140. There it is determined, if the available data rate is less than data rate value DR5 or not. If this is the case, then in step 150 two masking thresholds are calculated. One on accord of psycho acoustic model PAM_Low and the other on accord of psycho acoustic model PAM_Mid. Both masking thresholds are then combined to a resulting masking threshold. For this purpose both masking thresholds are weighted with their corresponding weighting factors $\alpha$ and $\beta$ as shown in Fig. 3. The combination operation makes use of the above mentioned formula 1 as described above. In case of a negative result in step 140, the next step is decision step 160. There it is determined, whether the available data rate is less than data rate value DR6. When this is true, the next step is step 170. There the two masking thresholds Mask_Mid and Mask_High are calculated based on the corresponding psycho acoustic models PAM_Mid and PAM_High. Also, they are weighted and combined as described for step 150. A negative result in decision step 160 leads to a decision step 180. Here it is analysed, whether the available data rate ADR is less than or equal to the data rate value DR7, shown in Fig. 3. After a positive decision program step 190 will be executed. There, the masking threshold is calculated based on psycho acoustic model PAM_High. A negative decision in step 180 leads to step 200 where an error detection algorithm is executed. After execution of one of the steps 150, 170, 190 and 200 the program is finished in step 130.

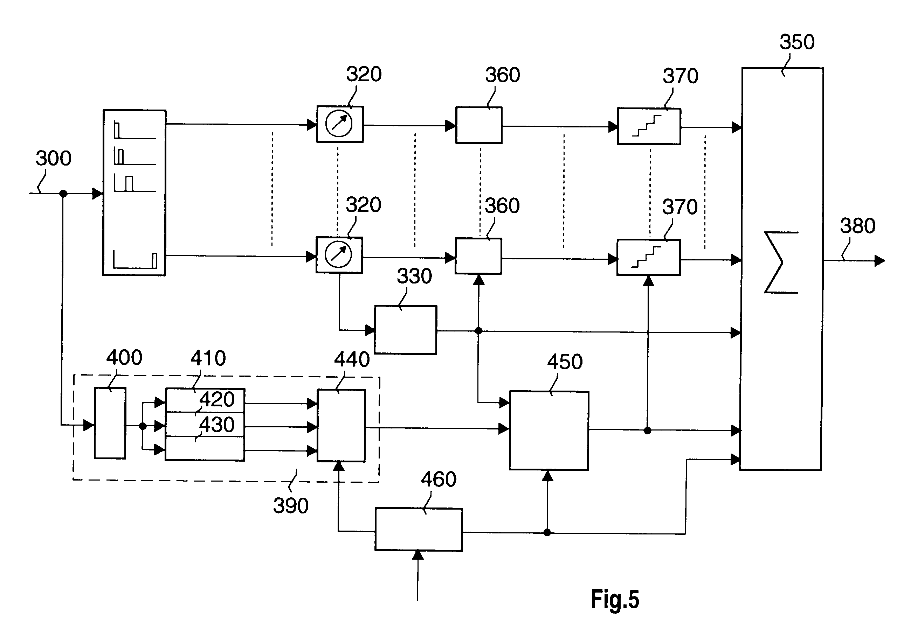

An apparatus for coding of audio signals which utilises the method of 'Soft Switching' will be described now with respect to Fig. 5.

This apparatus is based on the well known subband coding technique. The digitalized audio signal is fed via data bus 300 to filter bank 310. For ease it is assumed, that only one audio channel (Mono) is transmitted to the encoding apparatus. Of course the audio signal is fed in blocks to the coding apparatus. In filter bank 310 the audio signal is divided in 32 subbands. The subband samples are fed to blocks 320. Here, scale factors are calculated. They are used for data reduction purposes namely for suppressing leading '0'- and '1'-Bits of the subband samples. The scale factors of each subband block are fed to a scale factor quantization apparatus 330. There they are quantized, e.g. with 6 Bits resolution. The quantized scale factors are forwarded to a multiplexing device 350. Its function will be described later on. The subband samples are input in normalisation circuits 360 after they have passed block 320. Here the samples are multiplied by appropriate factors $1/U_s$, determined based on the quantized scale factors, which are input via busline 340. The normalised subband samples are fed to quantization circuits 370. Here, data reduction based on psycho acoustic effects is carried out. The bit resolution for quantization purposes is determined due to psycho acoustic models, which will be described hereinafter, so that quantization noise is not perceivable for the human ear. After passing the quantization circuits 370, the subband samples are forwarded to multiplexing device 350. Multiplexing device 350 creates the output bit stream of the encoding apparatus including all synchronisation and ancillary data. The bit stream is outputted via data bus 380.

The incoming bit stream via data bus 300 is fed to block 390. Therein, the frequency spectrum of the signal is calculated via a FFT-algorithm (Fast Fourier Transform) in block 400. Further on there are three different psycho acoustic models 410 to 430 available in block 390. The first one PAM_Low is adapted and optimised for a specific output bit stream of low bitrate, e.g. 32 kBit/s. The second one is adapted and optimised for an output bit stream of middle bitrate, e.g. 56 kBit/s. The third one is adapted and optimised for an output bit stream of high bitrate, e.g. 80 kBit/s. Each one of the psycho acoustic models is capable of determining a masking threshold Mask_Low, Mask_Mid, Mask_High.

In MPEG1 and MPEG2-Standard, there is the possibility of predefining the bitrate within a wide range of bitrates (free format). Dependent on the predefined bitrate value, in the 'Hard Switching' mode one psycho acoustic model is used for the calculation of the masking threshold. This was already described with respect to Fig. 1 and 2. In 'Soft Switching' mode there may be used two different psycho acoustic models. This depends on the value of the predefined bitrate as described with respect to Fig. 3 and 4. The two masking thresholds are forwarded to combining device 440, where they are combined. The resulting data is fed to bit allocation unit 450. In 'Hard Switching' mode combining device 450 works as a selecting device for selecting the appropriate masking threshold data and forwarding it to bit allocation unit 450. The bit allocation unit calculates the bit allocation and controls the quantization circuits 370. Bit allocation data is forwarded to multiplexing device 350. Control circuit 460 predefines the available data rate, e. g. on accord of an input by a user and controls in dependence thereof combining device 440 and bit allocation unit 450. It also inputs ancillary data to multiplexing device 350.

The invention can be used in nearly all audio systems like MPEG, DAB, DCC, MD.

When instead of a psycho acoustic model a model for the eye physiology is applied, the invention can also be used for video coding like MPEG 1 or MPEG 2.

Multiple modifications of the described embodiments are possible. E.g. the shown curves L, M and H shown in Fig. 3 could be of different shape. Also the number of psycho acoustic models could be different to three. Some of the blocks shown in Fig. 5 could be realised by an appropriate computer program which is executed by a standard or specialised microprocessor. For combining the masking thresholds in 'Soft Switching' mode, a somewhat modified formula could be used instead of Formula 1. Also more than two masking thresholds could be combined.

**Claims**

1. Method for encoding of a digitalized audio signal, wherein data reduction is achieved by analysing the audio signal due to psycho acoustic effects, **characterised in** that two or more different psycho acoustic models (410, 420, 430) are used for the data reduction process, each one of the two or more different psycho acoustic models (410, 420, 430) leading to a certain masking threshold and wherein the certain masking thresholds are combined, thus leading to a resulting masking threshold.

2. Method according to claim 1, **wherein** the combination of the masking thresholds is a weighted combination and wherein the weighting factors ($\alpha$, $\beta$) are determined in dependence of the available data rate (ADR) for the encoded bit stream.

3. Method according to one of claims 1 or 2, **wherein** the weighted combination is linear combination according to the following formula:

$$Mask = \alpha * Mask1 + \beta * Mask2$$

wherein

*Mask* is the resulting masking threshold,
*Mask1* is the masking threshold resulting from the first psycho acoustic model (PAM_Low),
*Mask2* is the masking threshold resulting from the second psycho acoustic model (PAM_Mid),
$\alpha$ is the weighting factor for *Mask1* and
$\beta$ is the weighting factor for *Mask2*.

4. Method according to one of claims 1 to 3, **wherein** for each of the two or more psycho acoustic models (410, 420, 430) an appropriate curve (L, M, H) is provided, which has as an independent variable the available data rate (ADR) and as function values, values between '0' and '1' for determination of the weighting factors ($\alpha$, $\beta$) in dependence of the available data rate.

5. Apparatus for encoding of a digitalized audio signal comprising data reduction means (450, 370) for reducing the digital data of the audio signal due to a masking threshold being determined under consideration of psycho acoustic effects, **characterised in** that two or more psycho acoustic model means (410, 420, 430) are provided for calculation of respective masking thresholds, each psycho acoustic model means (410, 420, 430) being adapted to a specific data rate for the encoded bit stream, combining means (440) for combining the generated masking thresholds of the two or more psycho acoustic model means (410, 420, 430), thus leading to a resulting masking threshold which is used by the data reduction means (450, 350).

6. Apparatus according to claim 5, **wherein** weighting means (440) are provided for weighting the two or more masking thresholds before they are combined.

7. Apparatus according to claim 5 or 6, **wherein** the weighting means (440) determine the weighting factors ($\alpha$, $\beta$) in dependence of the available data rate (ADR) for the encoded bit stream.

**Patentansprüche**

1. Verfahren zum Kodieren eines digitalisierten Audiosignals, wobei eine Datenreduktion durch eine Analyse des Audiosignals aufgrund psychoakustischer Effekte erfolgt, dadurch gekennzeichnet, daß zwei oder mehrere unterschiedliche psychoakustische Modelle (410, 420, 430) für den Daten-Reduktionsvorgangs angewendet werden, daß jedes der zwei oder mehreren unterschiedlichen psychoakustischen Modelle (410, 420, 430) zu einem bestimmten Verdeckungsschwellwert führt und daß die bestimmten Verdeckungsschwellwerte kombiniert werden und dadurch zu einem resultierenden Verdeckungsschwellwert führen.

2. Verfahren nach Anspruch 1, wobei die Kombination der Verdeckungsschwellwerte eine gewichtete Kombination ist und die Wichtungsfaktoren ($\alpha$, $\beta$) in Abhängigkeit von der verfügbaren Datenrate (ADR) für den kodierten Bitstrom ermittelt werden.

3. Verfahren nach einem der Ansprüche 1 oder 2, wobei die gewichtete Kombination eine lineare Kombination nach der folgenden Gleichung ist:

$$Mask = \alpha * Mask1 + \beta * Mask2$$

wobei

*Mask* der resultierende Verdeckungsschwellwert,
*Mask1* der aus dem ersten psychoakustischen Modell (PAM_Low) resultierende Verdeckungsschwellwert,
*Mask2* der aus dem zweiten psychoakustischen Modell (PAM_Mid) resultierende Verdeckungsschwellwert,
$\alpha$ der Wichtungsfaktor für *Mask1* und
$\beta$ der Wichtungsfaktor für *Mask2* ist.

4. Verfahren nach einem der Ansprüche 1 bis 3, wobei für jedes der zwei oder mehreren psychoakustischen Modelle (410, 420, 430) eine eigene Kurve (L, M, H) vorgesehen ist, die als eine unabhängige Variable die verfügbare Datenrate (ADR) und als Funktionswerte Werte zwischen "0" und "1" zur Ermittlung der Wichtungsfaktoren ($\alpha$,$\beta$) in Abhängigkeit von der verfügbaren Datenrate besitzt.

**5.** Vorrichtung zum Kodieren eines digitalisierten Audiosignals, enthaltend Mittel (450, 370) zur Datenreduktion zur Reduzierung der digitalen Daten des Audiosignals aufgrund eines Verdeckungsschwellwertes, der unter Berücksichtigung von psychoakustischen Effekten ermittelt wird, dadurch gekennzeichnet, daß zwei oder mehrere Mittel (310, 420, 430) für psychoakustische Modelle für die Berechnung von jeweiligen Verdeckungsschwellwerten vorgesehen sind, wobei jedes Mittel (410, 420, 430) der psychoakustischen Modelle an eine spezifische Datenrate für den kodierten Bitstrom angepaßt ist, wobei Kombiniermittel (440) zum Kombinieren der erzeugten Verdeckungsschwellwerte der zwei oder mehreren Mittel für ein psychoakustisches Modell vorgesehen sind, was zu einem resultierenden Verdeckungsschwellwert führt, der durch die Mittel (450, 350) zur Datenreduktion angewendet wird.

**6.** Vorrichtung nach Anspruch 5. wobei Wichtungsmittel (440) zum Wichten der zwei oder mehreren Verdeckungsschwellwerte vorgesehen sind, bevor diese kombiniert werden.

**7.** Vorrichtung nach Anspruch 5 oder 6, wobei die Wichtungsmittel (440) die Wichtungsfaktoren ($\alpha$, $\beta$) in Abhängigkeit von der verfügbaren Datenrate (ADR) für den kodierten Bitstrom ermitteln.


**Revendications**

**1.** Procédé de codage d'un signal audio-numérique par lequel la réduction des données est obtenue en analysant le signal audio lié aux effets psycho-acoustiques **caractérisé en ce que** deux modèles psycho-acoustiques différents ou plus (410, 420, 430) sont utilisés dans le processus de réduction de données, chacun de ces modèles psycho-acoustiques (410, 420, 430) générant un certain seuil de masquage et ces seuils étant combinés pour produire un nouveau seuil de masquage.

**2.** Procédé selon la revendication 1, pour lequel la combinaison des seuils de masquage est une pondération de combinaison et **pour lequel** les facteurs de pondération ($\alpha$, $\beta$) sont déterminés en fonction des débits de données disponibles (DDD) pour le flux binaire codé.

**3.** Procédé selon la revendication 1 ou 2, **par lequel** la combinaison évaluée est une combinaison linéaire selon la formule suivante :

$$Masque = \alpha * Masque1 + \beta * Masque2$$

Dans cette formule,

*Masque* est le seuil de masquage résultant de la combinaison des seuils,
*Masque1 est* le seuil de masquage résultant du premier modèle psycho-acoustique (MPA_Bas),
*Masque2* est le seuil de masquage résultant du deuxième modèle psycho-acoustique (MPA_Moy),
$\alpha$ est le facteur de pondération de *Masque1* et $\beta$ est le facteur de pondération de *Masque 2.*

**4.** Procédé selon l'une des revendications 1 à 3, **par lequel** à chacun des modèles psycho-acoustiques (410, 420, 430) correspond une courbe appropriée (L, M, H) dont la variable indépendante est le débit de données disponible et dont les valeurs fonctionnelles sont'0' et '1' pour la détermination des facteurs de pondération $\alpha$ *et* $\beta$ en fonction du débit de données disponible.

**5.** Appareil pour le codage d'un signal audio-numérique comprenant des moyens de réduction des données (450, 370) permettant de réduire les données numériques du signal audio lié à un seuil de masquage déterminé prenant en considération les effets psycho-acoustiques, **caractérisé en ce que** deux modèles psycho-acoustiques au moins (410, 420, 430) sont fournis pour le calcul des seuils de masquage correspondants, chaque modèle étant adapté à un débit de données spécifique pour le flux binaire codé, en combinant les moyens de combinaison (440) des seuils de masquage générés sur les modèles psycho-acoustiques (410, 420, 430), pour parvenir à un seuil de masquage utilisé par le moyen de réduction des données (450, 350).

**6.** Appareil selon la revendication 5, **par lequel** les moyens de pondération sont fournis pour la pondération de deux seuils de masquage au moins avant qu'ils soient combinés.

**7.** Appareil selon l'une des revendications 5 ou 6, **par lequel** le moyen de pondération (440) détermine les facteurs de pondération ($\alpha$, $\beta$) en fonction du débit de données disponible (DDD) pour le flux binaire codé.

**Fig.1**

**Fig.3**

Fig.2

Fig.4

EP 0 803 989 B1

Fig.5

EP 0 803 989 B1